# EUROPEAN PATENT APPLICATION

(11) **EP 4 482 206 A1**
(43) Date of publication of application: **25.12.2024**
(21) Application number: 23762846.6
(22) Date of filing: 27.02.2023
(51) Int. Cl.: H04W 36/00

(54) **CELL HANDOVER METHOD AND APPARATUS, AND USER EQUIPMENT**

(30) Priority: 01.03.2022 CN 202210195875
(71) Applicant: VIVO MOBILE COMMUNICATION CO., LTD., Dongguan, Guangdong 523863 (CN)
(72) Inventor: SONG, Erhao, Dongguan, Guangdong 523863 (CN); PAN, Xiang, Dongguan, Guangdong 523863 (CN); ZHOU, Tong, Dongguan, Guangdong 523863 (CN)
(74) Representative: Murgitroyd & Company
(86) International application number: PCT/CN2023/078462
(87) International publication number: WO 2023/165447

(57) **Abstract**

This application pertains to the communication field, and discloses a cell handover method and apparatus, and user equipment. The cell handover method in embodiments of this application includes: receiving, by user equipment UE, a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether the UE triggers measurement reporting based on a prediction result of an AI model; and performing, by the UE, AI model inference on at least one handover candidate cell based on the measurement reporting configuration to obtain an inference result, and performing a cell handover based on the inference result.

## Description

### CROSS-REFERENCE TO RELATED APPLICATION

This application claims priority to Chinese Patent Application No. 202210195875.6, filed in China on March 1, 2022, which is incorporated herein by reference in its entirety.

### TECHNICAL FIELD

This application pertains to the field of communication technologies, and specifically, relates to a cell handover method and apparatus, and user equipment.

### BACKGROUND

Currently, in a wireless communication system, when user equipment UE moves from one cell to another cell, to ensure service continuity of the electronic device during the movement, the electronic device needs to perform a cell handover.

However, in an existing cell handover procedure, the user equipment needs to go through a measurement reporting triggering process, a measurement result reporting process, a handover preparation process, a handover command delivery process, a handover execution process, and the like in a cell handover process. Therefore, there is a long delay in the cell handover of the UE. Moreover, the long delay in the cell handover may lead to poor signal quality of the UE in a serving cell in the cell handover process, resulting in a radio link failure (Radio Link Failure, RLF) or failure to receive a handover command. Therefore, in the prior art, the user equipment may have a problem of a long handover delay or cell handover failure in the cell handover process.

### SUMMARY

Embodiments of this application provide a cell handover method and apparatus, and user equipment to shorten a handover delay in a cell handover of the user equipment and increase a cell handover success rate.

According to a first aspect, a cell handover method is provided and applied to user equipment UE. The method includes: receiving, by the UE, a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether the UE triggers measurement reporting based on a prediction result of an AI model; and performing, by the UE, AI model inference on at least one handover candidate cell based on the measurement reporting configuration to obtain an inference result, and performing a cell handover based on the inference result.

According to a second aspect, a cell handover apparatus is provided. The cell handover apparatus includes a receiving module, an execution module, and a trigger module. The receiving module is configured to receive a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether UE triggers measurement reporting based on a prediction result of an AI model. The execution module is configured to perform AI model inference on at least one handover candidate cell based on the measurement reporting configuration received by the receiving module, to obtain an inference result. The trigger module is configured to perform a cell handover based on the inference result obtained by the execution module.

According to a third aspect, user equipment is provided. The user equipment includes a processor and a memory. The memory stores a program or instruction capable of running on the processor. When the program or instruction is executed by the processor, the steps of the method according to the first aspect are implemented.

According to a fourth aspect, user equipment is provided and includes a processor and a communication interface. The processor is configured to: receive a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether the UE triggers measurement reporting based on a prediction result of an AI model; perform AI model inference on at least one handover candidate cell based on the measurement reporting configuration to obtain an inference result; and perform a cell handover based on the inference result.

According to a fifth aspect, a readable storage medium is provided. The readable storage medium stores a program or instruction. When the program or instruction is executed by a processor, the steps of the method according to the first aspect are implemented.

According to a sixth aspect, a chip is provided. The chip includes a processor and a communication interface. The communication interface is coupled to the processor. The processor is configured to run a program or instruction to implement the method according to the first aspect.

According to a seventh aspect, a computer program or program product is provided. The computer program or program product is stored in a storage medium. The computer program or program product is executed by at least one processor to implement the steps of the cell handover method according to the first aspect.

In the embodiments of this application, the UE receives the measurement reporting configuration sent by the network-side device, where the measurement reporting configuration includes at least one of the following: the artificial intelligence AI model related information, the AI model input information, the AI model output information, the AI model inference trigger condition, the cell handover event related configuration, the reporting content expected by the network-side device, the total duration of the AI model prediction output, the number or interval of time points of the AI model prediction output, and the first indication information, where the first indication information is used to indicate whether the UE triggers measurement reporting based on the prediction result of the AI model; and the UE performs AI model inference on the at least one handover candidate cell based on the measurement reporting configuration to obtain the inference result, and performs the cell handover based on the inference result. Because the UE can receive the measurement reporting configuration sent by the network-side device, perform AI model inference on at least one neighboring cell based on the AI model input and output information in the network-side device and the AI model inference trigger condition, determine, based on the inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate.

### BRIEF DESCRIPTION OF DRAWINGS

FIG. 1 is a schematic diagram of an architecture of a communication system according to an embodiment of this application;
FIG. 2 is a schematic diagram of a cell handover method according to an embodiment of this application;
FIG. 3 is a schematic diagram of a cell handover method according to an embodiment of this application;
FIG. 4 is a schematic diagram of a cell handover method according to an embodiment of this application;
FIG. 5 is a schematic diagram of a cell handover apparatus according to an embodiment of this application;
FIG. 6 is a schematic diagram of a hardware structure of a communication device according to an embodiment of this application; and
FIG. 7 is a schematic diagram of a hardware structure of UE according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

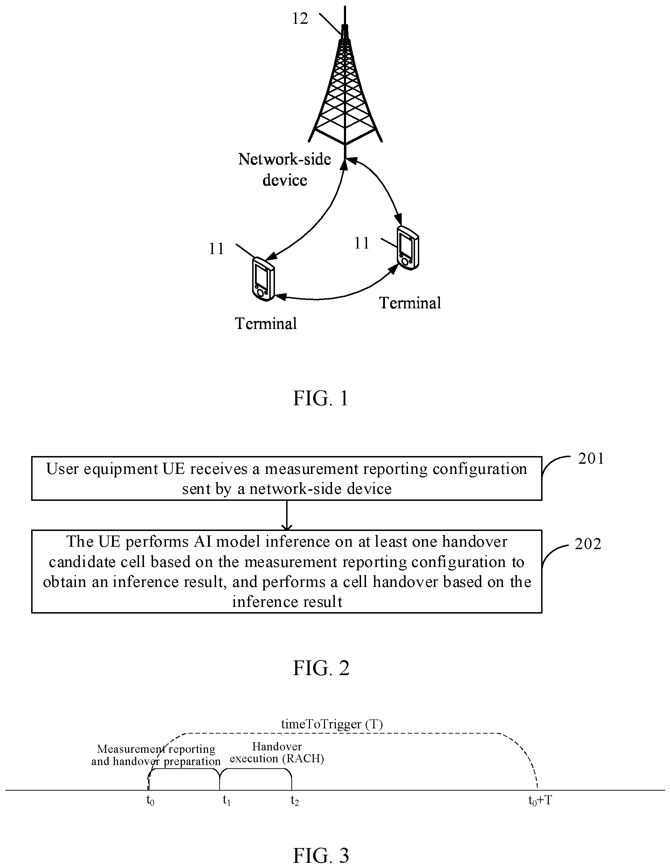

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. A cell handover method provided in the embodiments of this application is hereinafter described in detail by using some embodiments and application scenarios thereof with reference to the accompanying drawings.

Currently, if UE needs to perform a cell handover, the UE needs to go through a measurement reporting triggering process, a measurement result reporting process, a handover preparation process, a handover command delivery process, a handover execution process, and the like. Therefore, there is a long delay in the cell handover of the UE. Moreover, the long delay in the cell handover may lead to poor signal quality of the UE in a serving cell in the cell handover process, resulting in an RLF or failure to receive a handover command. Consequently, the cell handover of the UE fails.

The existing cell handover mainly includes the following steps.
(1) A source base station sends a measurement configuration to the UE.
(2) The UE performs measurement based on the measurement configuration sent by the source base station, and reports a measurement report when a condition is met.
(3) The source base station interacts with a target base station and prepares for the handover.
(4) The UE receives the handover command delivered by the source base station, and immediately disconnects from the source cell and accesses the target cell.

The following describes some concepts and/or terms related to a cell handover method and apparatus, user equipment, and a storage medium provided in the embodiments of this application.

### 1. Measurement reporting triggered by an event

Usually, when a reportType field in a measurement configuration is set to eventTriggered, UE may decide whether to trigger measurement reporting based on a configured event. As shown in Table 1, events are mainly classified into the following nine types:

**Table 1**

| Event | Definition | Entry and leave conditions |
|---|---|---|
| Event A1 | Quality of a serving cell is higher than a threshold | Entry condition: Ms - Hys > Thresh |
| | | Leave condition: Ms + Hys < Thresh |
| Event A2 | Quality of a serving cell is lower than a threshold | Entry condition: Ms + Hys < Thresh |
| | | Leave condition: Ms - Hys > Thresh |
| Event A3 | Quality of a neighboring cell is higher than that of a serving cell by an offset value | Entry condition: Mn + Ofn + Ocn - Hys > Mp + Ofp + Ocp + Off |
| | | Leave condition: Mn + Ofn + Ocn + Hys < Mp + Ofp + Ocp + Off |
| Event A4 | Quality of a neighboring cell is higher than a threshold | Entry condition: Mn + Ofn + Ocn - Hys > Thresh |
| | | Leave condition: Mn + Ofn + Ocn + Hys < Thresh |
| Event A5 | Quality of a serving cell is lower than a threshold 1 Quality of a neighboring cell is higher than a threshold 2 | Entry condition: Mp + Hys < Thresh1 Mn + Ofn + Ocn - Hys > Thresh2 |
| | | Leave condition: Mp - Hys > Thresh1 Mn + Ofn + Ocn + Hys < Thresh2 |
| Event A6 | Quality of a neighboring cell is higher than that of a secondary cell | Entry condition: Mn + Ocn - Hys > Ms + Ocs + Off |
| | | Leave condition: Mn + Ocn + Hys < Ms + Ocs + Off |
| Event B1 | Quality of an inter-RAT neighboring cell is higher than a threshold | Entry condition: Mn + Ofn + Ocn - Hys > Thresh |
| | | Leave condition: Mn + Ofn + Ocn + Hys < Thresh |
| Event B2 | Quality of a primary cell is lower than a threshold 1 Quality of an inter-RAT neighboring cell is higher than a threshold 2 | Entry condition: Mp + Hys < Thresh1 Mn + Ofn + Ocn - Hys > Thresh2 |
| | | Leave condition: Mp - Hys > Thresh1 Mn + Ofn + Ocn + Hys < Thresh2 |
| Event I1 | Quality of interference is higher than a threshold | Entry condition: Mi - Hys > Thresh |
| | | Leave condition: Mi + Hys < Thresh |

A common event of an intra-RAT handover is the event A3 or A5. Using the event A3 as an example, meanings of parameters of the entry condition and the leave condition are as follows:
Mn: a measurement result of the neighboring cell, regardless of any offset;
Ofn: a specific offset of a measurement object in the neighboring cell;
Ocn: a cell-level specific offset of the neighboring cell;

Mp: a measurement result of a primary serving cell (SpCell), regardless of any offset;
Ofp: a specific offset of a measurement object in the SpCell;
Ocp: a cell-level specific offset of the SpCell;
   Hys: a hysteresis parameter of the event; and
   Off: an offset parameter of the event.

To avoid a ping-pong handover, a base station configures a time-to-trigger (*timeToTrigger*) parameter for each event in a measurement reporting configuration.
(1) When L3 filtered signal quality of one or more cells within the *timeToTrigger* time all meets the entry condition of the event, the UE includes a corresponding cell into a cells triggered list (*cellsTriggeredList*) and triggers reporting.
(2) If *ReportOnLeave* is enabled in the reporting configuration, when L3 filtered signal quality of one or more cells in the cellsTriggeredList within the *timeToTrigger* time all meets the leave condition of the event, the UE removes the corresponding cell from the *cellsTriggeredList* and triggers reporting.

An embodiment of this application provides an AI-based cell handover method, where AI is used to predict signal quality of a serving cell of a network-side device and/or signal quality of a neighboring cell of UE at one or more times in the future, so that whether to trigger measurement reporting can be determined based on a prediction result, and that the related prediction result can be reported.

An embodiment of this application provides a cell handover method. FIG. 2 is a flowchart of a cell handover method according to an embodiment of this application. As shown in FIG. 2, the cell handover method provided in this embodiment of this application may include the following step 201 and step 202.

Step 201: User equipment UE receives a measurement reporting configuration sent by a network-side device.

In this embodiment of this application, the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether the UE triggers measurement reporting based on a prediction result of an AI model.

Optionally, in this embodiment of this application, the measurement reporting configuration may be configured by the network-side device, preconfigured, predefined, prescribed in a protocol, or the like.

In this embodiment of this application, when the UE needs to perform a cell handover, the UE may receive the measurement reporting configuration sent by the network-side device, trigger measurement reporting based on information in the measurement reporting configuration, and report a measurement result, so that the network-side device can prepare for the handover and send a handover command to the UE, and that the UE can receive the handover command sent by the network-side device and perform the handover.

Optionally, in this embodiment of this application, the AI model input information includes at least one of the following: signal quality of a serving cell of the network-side device and/or signal quality of a neighboring cell of the UE at a target time; a movement parameter of the UE at the target time; an antenna panel parameter of the UE at the target time, where the antenna panel parameter includes at least one of the following: an antenna panel orientation, an antenna panel rotation direction, and an antenna panel rotation speed; location information of the UE at the target time; target location information, where the target location information is used to indicate a location of the network-side device and/or a location of a network-side device corresponding to the neighboring cell of the UE; target direction information, where the target direction information is used to indicate an antenna panel orientation of the network-side device; current frequency information of the UE and/or other frequency information or radio access technology RAT information; and a beam angle and beam quality of the UE at the target time and/or a historical time, where the target time is a time when execution of AI model inference is triggered or the historical time.

Optionally, in this embodiment of this application, the AI model output information includes at least one of the following: at least one predicted signal quality; lowest signal quality in at least one predicted signal quality; a minimum difference in every two signal quality differences in at least one predicted signal quality; a handover success rate of the at least one handover candidate cell; a handover delay of the at least one handover candidate cell; a probability that an unexpected event occurs in the at least one handover candidate cell; and at least one beam quality, where the at least one predicted signal quality is signal quality of the serving cell of the network-side device and/or signal quality of the neighboring cell of the UE at at least one first time, the at least one first time is a time within the total duration of the AI model prediction output, and the at least one signal quality is in a one-to-one correspondence with the at least one first time.

Optionally, in this embodiment of this application, the unexpected event includes at least one of the following: a too late handover event; a too early handover event; and a handover to an incorrect cell.

Optionally, in this embodiment of this application, the too late handover event means that the UE has been in a source cell for a too long time, resulting in an RLF, and attempts radio resource control (Radio Resource Control, RRC) reestablishment in other cells. The too early handover event means that an RLF occurs shortly after the UE is successfully handed over to a target cell or during a handover of the UE to a target cell, and that the UE attempts RRC reestablishment in the source cell. The handover to the incorrect cell means that an RLF occurs shortly after the UE is successfully handed over to the target cell or during the handover of the UE to the target cell, and that the UE attempts RRC reestablishment in other cells (not the source cell in the previous handover or the target cell).

Optionally, in this embodiment of this application, the AI model inference trigger condition includes at least one of the following: a periodic trigger condition, an event trigger condition, and a measurement reporting trigger condition.

Optionally, in this embodiment of this application, the event trigger condition includes at least one of the following: the signal quality of the serving cell of the network-side device is less than or equal to a first preset threshold; the signal quality of the neighboring cell of the UE is greater than or equal to a second preset threshold; and a difference between the signal quality of the serving cell of the network-side device and the signal quality of the neighboring cell of the UE is less than or equal to a third preset threshold.

Optionally, in this embodiment of this application, the periodic trigger condition is: the network-side device needs to configure a model inference period.

Optionally, in this embodiment of this application, the measurement reporting trigger condition is: the UE triggers execution of AI model inference when triggering measurement reporting based on the information in the measurement reporting configuration, and reports an inference result.

Optionally, in this embodiment of this application, the signal quality includes at least one of the following: reference signal received power (Reference Signal Received Power, RSRP), reference signal received quality (Reference Signal Received Quality, RSRQ), and a signal to interference plus noise ratio (Signal to Interference plus Noise Ratio, SINR).

Optionally, in this embodiment of this application, the reporting content includes at least one of the following: signal quality of a serving cell of the network-side device and/or signal quality of a neighboring cell of the UE at a second time, where the second time is a time when measurement reporting is triggered, and the signal quality is the signal quality of the serving cell of the network-side device and/or the signal quality of the neighboring cell of the UE, or the signal quality is at least one beam signal quality; a signal quality prediction result of the serving cell of the network-side device and/or a signal quality prediction result of the neighboring cell of the UE at each time point of the AI model prediction output on the UE; at least one handover time point and a target signal quality prediction result, where the at least one handover time point is an optimal handover time point among the time points of the AI model prediction output, and the target signal quality prediction result is a signal quality prediction result of the serving cell of the network-side device and/or a signal quality prediction result of the neighboring cell of the UE at the at least one handover time point; a handover success rate of handing over the UE to each handover candidate cell at each time point of the AI model prediction output; a handover delay in handing over the UE to each handover candidate cell at each time point of the AI model prediction output; and a probability that an unexpected event occurs in handing over the UE to each handover candidate cell at each time point of the AI model prediction output.

Optionally, in this embodiment of this application, the reporting content is determined based on the inference result.

Step 202: The UE performs AI model inference on at least one handover candidate cell based on the measurement reporting configuration to obtain the inference result, and performs the cell handover based on the inference result.

In this embodiment of this application, the inference result is used to trigger the UE to perform the cell handover.

Optionally, in this embodiment of this application, the inference result includes at least one of the following: predicted signal quality of the at least one handover candidate cell within the total duration of the AI model prediction output and real signal quality of the at least one handover candidate cell.

Optionally, in this embodiment of this application, the predicted signal quality includes at least one of the following: RSRP, RSRQ, and an SINR.

Optionally, in this embodiment of this application, the process of performing the cell handover based on the inference result includes: triggering, by the UE, measurement reporting based on the inference result.

Optionally, in this embodiment of this application, "triggering measurement reporting based on the inference result" in the foregoing step 202 may be specifically implemented by at least one of the following three steps: step 202a, step 202b, and step 202c.

Step 202a: In a case that predicted signal quality of a target handover candidate cell always meets a preset handover event entry condition within the total duration of the AI model prediction output, the UE triggers reporting of a first measurement report.

In this embodiment of this application, the first measurement report is used to indicate that the predicted signal quality of the target handover candidate cell meets the preset handover event entry condition.

Step 202b: In a case that predicted signal quality of a target handover candidate cell always meets a preset handover event leave condition within the total duration of the AI model prediction output, the UE triggers reporting of a second measurement report.

In this embodiment of this application, the second measurement report is used to indicate that the predicted signal quality of the target handover candidate cell meets the preset handover event leave condition.

Step 202c: In a case that real signal quality of a target handover candidate cell meets a preset handover event entry condition within measurement reporting trigger duration configured by the network-side device, the UE triggers reporting of a third measurement report.

In this embodiment of this application, the third measurement report is used to indicate that the real signal quality of the target handover candidate cell meets the preset handover event entry condition.

The target handover candidate cell is one or more of the at least one handover candidate cell.

Optionally, in this embodiment of this application, content included in the first measurement report may include at least one item of the reporting content; content included in the second measurement report may include at least one item of the reporting content; and content included in the third measurement report may include at least one item of the reporting content.

It should be noted that the content included in the first measurement report, the content included in the second measurement report, and the content included in the third measurement report are the same or different (for example, completely different or partially different).

Optionally, in this embodiment of this application, the total duration of the AI model prediction output and the measurement reporting trigger duration are duration separately configured by the network-side device; or both the total duration of the AI model prediction output and the measurement reporting trigger duration are duration configured by the network-side device by using the measurement reporting configuration.

According to the cell handover method provided in this embodiment of this application, in this embodiment of this application, the UE receives the measurement reporting configuration sent by the network-side device, where the measurement reporting configuration includes at least one of the following: the artificial intelligence AI model related information, the AI model input information, the AI model output information, the AI model inference trigger condition, the cell handover event related configuration, the reporting content expected by the network-side device, the total duration of the AI model prediction output, the number or interval of time points of the AI model prediction output, and the first indication information, where the first indication information is used to indicate whether the UE triggers measurement reporting based on the prediction result of the AI model; and the UE performs AI model inference on the at least one handover candidate cell based on the measurement reporting configuration to obtain the inference result, and performs the cell handover based on the inference result. Because the UE can receive the measurement reporting configuration sent by the network-side device, perform AI model inference on at least one neighboring cell based on the AI model input and output information in the network-side device and the AI model inference trigger condition, determine, based on the inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate.

Optionally, in this embodiment of this application, after the foregoing step 202, the cell handover method provided in this embodiment of this application further includes the following step 301 and step 302.

Step 301: The UE receives a handover command sent by the network-side device, where the handover command is used to instruct to hand over the UE to a target cell that is selected from the at least one handover candidate cell based on the inference result.

Optionally, in this embodiment of this application, the target cell may be selected by the UE based on the inference result, or configured by the network-side device for the UE based on the received inference result.

Step 302: The UE initiates a random access request to the target cell according to the handover command, where the random access request is used for requesting access to the target cell.

An embodiment of this application provides a cell handover method corresponding to step 202a in the foregoing embodiment. As shown in FIG. 3, assuming that a target handover candidate cell includes a candidate cell (for example, a neighboring cell A), the method is described by using the following step 21 to step 26.

Step 21: UE receives a measurement reporting configuration sent by a network-side device.

Optionally, in this embodiment of this application, a part of the measurement reporting configuration includes: a cell handover event related configuration, total duration of an AI model prediction output, the number or interval of time points of the AI model prediction output, an AI model inference trigger condition, a condition for triggering measurement reporting, and reporting content.

Optionally, in this embodiment of this application, the AI model inference trigger condition is: a difference between signal quality of a serving cell of the network-side device and signal quality of a neighboring cell of the UE is less than or equal to a third preset threshold.

Optionally, in this embodiment of this application, the condition for triggering measurement reporting is: in a case that predicted signal quality of a target handover candidate cell always meets a preset handover event entry condition within the total duration of the AI model prediction output, the UE includes the target handover candidate cell into a cells triggered list, and reports a first measurement report to the network-side device.

Optionally, in this embodiment of this application, the reporting content is: measurement results of predicted signal quality of the serving cell of the network-side device and the neighboring cell at the number or interval of time points of the AI model prediction output within the total duration of the AI model prediction output.

Step 22: At a time *t*₀, in a case that a difference between the signal quality of the serving cell of the network-side device and the signal quality of the neighboring cell A is less than or equal to the third preset threshold, the UE performs AI model inference on the neighboring cell A based on the measurement reporting configuration.

Optionally, in this embodiment of this application, the time *t*₀ is a time when the UE triggers execution of AI model inference.

Step 23: The UE obtains signal quality prediction values of the serving cell of the network-side device and the neighboring cell A at each time Δ*t* within a time *t*₀ ~ *t*₀ + *T* through inference.

Optionally, in this embodiment of this application, *T* is the total duration of the AI model prediction output, and Δ*t* is the number or interval of time points of the AI model prediction output.

Step 24: In a case that the signal quality prediction values of the serving cell of the network-side device and the neighboring cell A always meet a handover event entry condition within the time *T*, the UE reports a first measurement report to the network-side device.

Optionally, in this embodiment of this application, the first measurement report includes signal quality of the serving cell of the network-side device and the neighboring cell A in each time Δ*t* within the time *T.*

Step 25: The UE receives, within a time *t*₁, a handover command sent by the network-side device.

Optionally, in this embodiment of this application, the handover command is used to instruct to hand over the UE to the neighboring cell A.

Optionally, in this embodiment of this application, the time *t*₁ is a time when the UE receives the handover command sent by the network-side device.

Step 26: The UE initiates a random access request to the neighboring cell Abased on the handover command, and completes the handover at a time *t*₂.

Optionally, in this embodiment of this application, the random access request is used for requesting access to the neighboring cell A.

Optionally, in this embodiment of this application, the time 12 is a time when the UE completes the handover.

According to the cell handover method provided in this embodiment of this application, because the UE can receive the measurement reporting configuration sent by the network-side device, perform AI model inference on at least one neighboring cell based on AI model input and output information in the network-side device and the AI model inference trigger condition, determine, based on an inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate. An embodiment of this application provides a cell handover method corresponding to step 202b in the foregoing embodiment. The method provided in this embodiment of this application is described by using the following step 31.

Step 31: UE receives a measurement reporting configuration sent by a network-side device.

Optionally, in this embodiment of this application, the configuration includes a timeToTrigger configuration and indication information of an event.

Optionally, in this embodiment of this application, the indication information is used to indicate whether the UE triggers measurement reporting based on a prediction result output by an AI model.

Step 31 includes two manners: manner 1 and manner 2.

### Manner 1

In a case that predicted signal quality of a target candidate cell always meets an event entry condition within a timeToTrigger, the corresponding target candidate cell is included into a cells triggered list, and reporting is triggered.

### Manner 2

In a case that predicted signal quality of a target candidate cell in a cells triggered list always meets a configured handover event leave condition within a timeToTrigger, the corresponding target candidate cell is removed from the cells triggered list, and reporting is triggered.

It should be noted that the indication information may be intended for each UE or each measurement identifier (measurement ID) or each event (reportConfig).

According to the cell handover method provided in this embodiment of this application, because the UE can receive the measurement reporting configuration sent by the network-side device, perform AI model inference on at least one neighboring cell based on AI model input and output information in the network-side device and an AI model inference trigger condition, determine, based on an inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate.

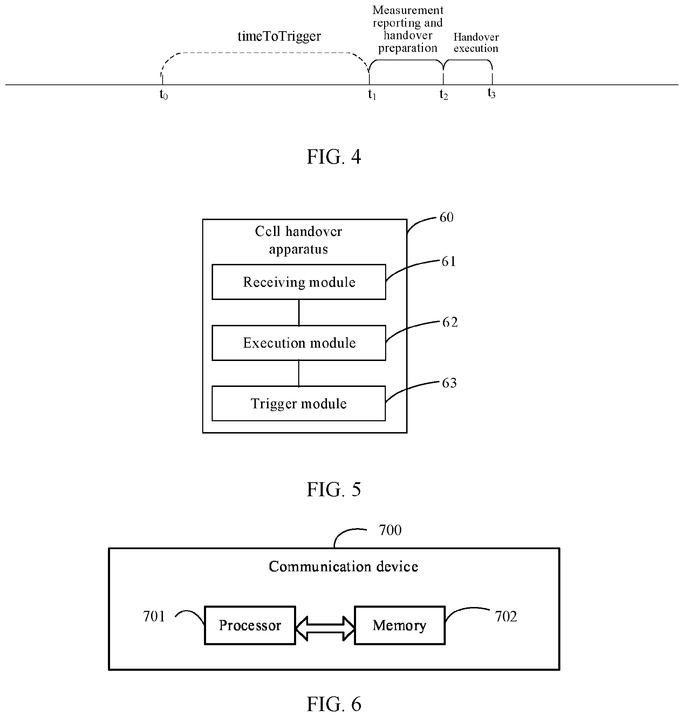

An embodiment of this application provides a cell handover method corresponding to step 202c in the foregoing embodiment. For example, as shown in FIG. 4, assuming that target handover candidate cells include two candidate cells (for example, a neighboring cell B and a neighboring cell C), the method is described by using the following step 41 to step 46.

Step 41: UE receives a measurement reporting configuration sent by a network-side device.

Optionally, in this embodiment of this application, a part of the measurement reporting configuration includes: a cell handover event related configuration, total duration of an AI model prediction output, the number or interval of time points of the AI model prediction output, an AI model inference trigger condition, a condition for triggering measurement reporting, and reporting content.

Optionally, in this embodiment of this application, the AI model inference trigger condition is: in a case that real signal quality of a target handover candidate cell meets a preset handover event entry condition within measurement reporting trigger duration configured by the network-side device, the UE reports a third measurement report to the network-side device.

Optionally, in this embodiment of this application, the real signal is an L3 filtered signal.

Optionally, in this embodiment of this application, the third measurement report is used to indicate that the real signal quality of the target handover candidate cell meets the preset handover event entry condition.

Optionally, in this embodiment of this application, the condition for triggering measurement reporting is a measurement reporting trigger condition.

It should be noted that the measurement reporting trigger condition is: the UE triggers execution of AI model inference when triggering measurement reporting based on the information in the measurement reporting configuration, and reports an inference result.

Optionally, in this embodiment of this application, the reporting content is: measurement results of predicted signal quality of a serving cell of the network-side device and the neighboring cells at the number or interval of time points of the AI model prediction output within the total duration of the AI model prediction output.

Step 42: At a time *t*₃, the UE meets an entry condition of the cell handover event related configuration for the first time.

Optionally, in this embodiment of this application, the time *t*₃ is a time when the UE meets the entry condition of the cell handover event related configuration for the first time.

Step 43: At a time *t*₄, in a case that both the neighboring cell B and the neighboring cell C meet the reporting trigger condition when the measurement reporting trigger duration expires, the UE performs AI model inference on the neighboring cell B and the neighboring cell C based on the measurement reporting configuration.

Optionally, in this embodiment of this application, the time *t*₄ is a time when the UE performs AI model inference on the neighboring cell B and the neighboring cell C.

Step 44: The UE obtains signal quality prediction values of the serving cell of the network-side device, and the neighboring cell B and the neighboring cell C at each time Δ*t* within a time *t*₃ ~ *t*₃ - *T* through inference, and reports a third measurement report to the network-side device.

Optionally, in this embodiment of this application, the third measurement report is used to indicate that real signal quality of the neighboring cell B and the neighboring cell C meets the preset handover event entry condition, and the third measurement report includes signal quality of the serving cell of the network-side device, and the neighboring cell B and the neighboring cell C at each time Δ*t* within the time *T.*

Step 45: The UE receives, within a time *t*₅, a handover command sent by the network-side device.

Optionally, in this embodiment of this application, the handover command is used to instruct to hand over the UE to the neighboring cell C.

Optionally, in this embodiment of this application, the time *t*₅ is a time when the UE receives the handover command sent by the network-side device.

Step 46: The UE initiates a random access request to the neighboring cell C based on the handover command, and completes a handover at a time *t*₆.

Optionally, in this embodiment of this application, the random access request is used for requesting access to the neighboring cell C.

Optionally, in this embodiment of this application, the time *t*₆ is a time when the UE completes the handover.

According to the cell handover method provided in this embodiment of this application, because the UE can receive the measurement reporting configuration sent by the network-side device, perform AI model inference on at least one neighboring cell based on AI model input and output information in the network-side device and the AI model inference trigger condition, determine, based on the inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate.

The cell handover method provided in this embodiment of this application may be performed by a cell handover apparatus. A cell handover apparatus provided in an embodiment of this application is described by assuming that the cell handover method in this embodiment of this application is performed by the cell handover apparatus.

FIG. 5 is a schematic diagram of a possible structure of a cell handover apparatus according to an embodiment of this application. As shown in FIG. 5, the cell handover apparatus 60 may include a receiving module 61, an execution module 62, and a trigger module 63.

The receiving module 61 is configured to receive a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether UE triggers measurement reporting based on a prediction result of an AI model. The execution module 62 is configured to perform AI model inference on at least one handover candidate cell based on the measurement reporting configuration received by the receiving module 61, to obtain an inference result. The trigger module 63 is configured to perform a cell handover based on the inference result obtained by the execution module 62.

According to the cell handover apparatus provided in this embodiment of this application, because the UE can receive the measurement reporting configuration sent by the network-side device, perform AI model inference on at least one neighboring cell based on the AI model input and output information in the network-side device and the AI model inference trigger condition, determine, based on the inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate.

In a possible implementation, the AI model input information includes at least one of the following: signal quality of a serving cell of the network-side device and/or signal quality of a neighboring cell of the UE at a target time; a movement parameter of the UE at the target time; an antenna panel parameter of the UE at the target time, where the antenna panel parameter includes at least one of the following: an antenna panel orientation, an antenna panel rotation direction, and an antenna panel rotation speed; location information of the UE at the target time; target location information, where the target location information is used to indicate a location of the network-side device and/or a location of a network-side device corresponding to the neighboring cell of the UE; target direction information, where the target direction information is used to indicate an antenna panel orientation of the network-side device; current frequency information of the UE and/or other frequency information or radio access technology RAT information; and a beam angle and beam quality of the UE at the target time and/or a historical time, where the target time is a time when execution of AI model inference is triggered or the historical time.

In a possible implementation, the AI model output information includes at least one of the following: at least one predicted signal quality; lowest signal quality in at least one predicted signal quality; a minimum difference in every two signal quality differences in at least one predicted signal quality; a handover success rate of the at least one handover candidate cell; a handover delay of the at least one handover candidate cell; a probability that an unexpected event occurs in the at least one handover candidate cell; and at least one beam quality, where the at least one signal quality is signal quality of the serving cell of the network-side device and/or signal quality of the neighboring cell of the UE at at least one first time, the at least one first time is a time within the total duration of the AI model prediction output, and the at least one signal quality is in a one-to-one correspondence with the at least one first time.

In a possible implementation, the unexpected event includes at least one of the following: a too late handover event; a too early handover event; and a handover to an incorrect cell.

In a possible implementation, the AI model inference trigger condition includes at least one of the following: a periodic trigger condition, an event trigger condition, and a measurement reporting trigger condition.

In a possible implementation, the event trigger condition includes at least one of the following: the signal quality of the serving cell of the network-side device is less than or equal to a first preset threshold; the signal quality of the neighboring cell of the UE is greater than or equal to a second preset threshold; and a difference between the signal quality of the serving cell of the network-side device and the signal quality of the neighboring cell of the UE is less than or equal to a third preset threshold.

In a possible implementation, the reporting content includes at least one of the following: signal quality of a serving cell of the network-side device and/or signal quality of a neighboring cell of the UE at a second time, where the second time is a time when measurement reporting is triggered, and the signal quality is the signal quality of the serving cell of the network-side device and/or the signal quality of the neighboring cell of the UE, or the signal quality is at least one beam signal quality; a signal quality prediction result of the serving cell of the network-side device and/or a signal quality prediction result of the neighboring cell of the UE at each time point of the AI model prediction output on the UE; at least one handover time point and a target signal quality prediction result, where the at least one handover time point is an optimal handover time point among the time points of the AI model prediction output, and the target signal quality prediction result is a signal quality prediction result of the serving cell of the network-side device and/or a signal quality prediction result of the neighboring cell of the UE at the at least one handover time point; a handover success rate of handing over the UE to each handover candidate cell at each time point of the AI model prediction output; a handover delay in handing over the UE to each handover candidate cell at each time point of the AI model prediction output; and a probability that an unexpected event occurs in handing over the UE to each handover candidate cell at each time point of the AI model prediction output.

In a possible implementation, the reporting content is determined based on the inference result.

In a possible implementation, the inference result includes at least one of the following: predicted signal quality of the at least one handover candidate cell within the total duration of the AI model prediction output and real signal quality of the at least one handover candidate cell.

In a possible implementation, the process of performing a cell handover based on the inference result includes: triggering, by the UE, measurement reporting based on the inference result.

In a possible implementation, the trigger module 63 is specifically configured to: in a case that predicted signal quality of a target handover candidate cell always meets a preset handover event entry condition within the total duration of the AI model prediction output, trigger, by the UE, reporting of a first measurement report; in a case that predicted signal quality of a target handover candidate cell always meets a preset handover event leave condition within the total duration of the AI model prediction output, trigger, by the UE, reporting of a second measurement report; or in a case that real signal quality of a target handover candidate cell meets a preset handover event entry condition within measurement reporting trigger duration configured by the network-side device, trigger, by the UE, reporting of a third measurement report, where the target handover candidate cell is one or more of the at least one handover candidate cell.

In a possible implementation, the total duration of the AI model prediction output and the measurement reporting trigger duration are duration separately configured by the network-side device; or both the total duration of the AI model prediction output and the measurement reporting trigger duration are duration configured by the network-side device by using the measurement reporting configuration.

In a possible implementation, the cell handover apparatus further includes an initiation module, where after the trigger module 63 triggers measurement reporting based on the inference result, the receiving module 61 is further configured to receive a handover command sent by the network-side device, where the handover command is used to instruct to hand over the UE to a target cell that is selected from the at least one handover candidate cell based on the inference result; and the initiation module is configured to initiate a random access request to the target cell according to the handover command received by the receiving module 61, where the random access request is used for requesting access to the target cell.

The cell handover apparatus in this embodiment of this application may be an electronic device, for example, an electronic device with an operating system, or may be a component in an electronic device, for example, an integrated circuit or a chip. The electronic device may be UE, or may be other devices than UE. For example, the UE may include but is not limited to the foregoing illustrated type of the terminal 11. The other devices may be a server, a network attached storage (Network Attached Storage, NAS), and the like. This is not specifically limited in this embodiment of this application.

The cell handover apparatus provided in this embodiment of this application can implement each process implemented in the method embodiments in FIG. 1 to FIG. 4, with the same technical effect achieved. To avoid repetition, details are not described herein again.

Optionally, as shown in FIG. 6, an embodiment of this application further provides a communication device 700, including a processor 701 and a memory 702. The memory 702 stores a program or instruction capable of running on the processor 701. For example, when the communication device 700 is UE, and the program or instruction is executed by the processor 701, the steps of the foregoing cell handover method embodiment are implemented, with the same technical effect achieved. When the communication device 700 is a network-side device, and the program or instruction is executed by the processor 701, the steps of the foregoing cell handover method embodiment are implemented, with the same technical effect achieved. To avoid repetition, details are not described herein again.

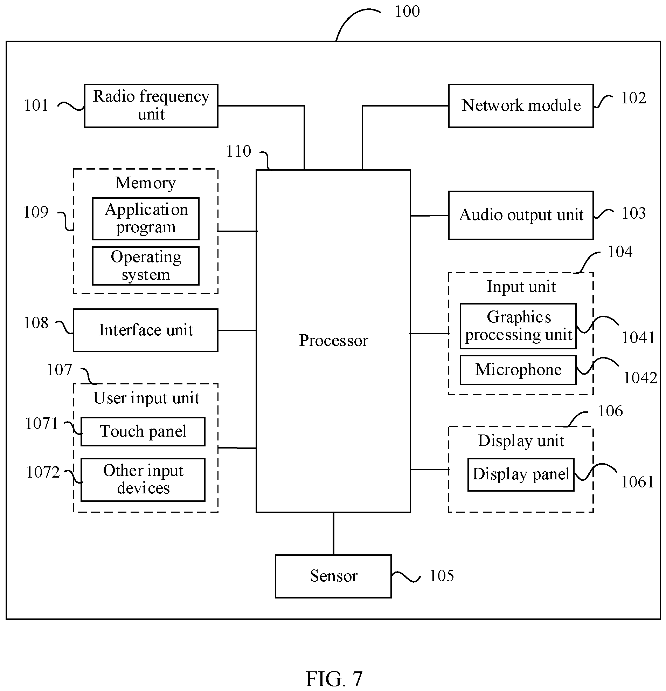

An embodiment of this application further provides UE, including a processor and a communication interface. The processor is configured to receive a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether the UE triggers measurement reporting based on a prediction result of an AI model; perform AI model inference on at least one handover candidate cell based on the measurement reporting configuration to obtain an inference result; and perform a cell handover based on the inference result. The UE embodiment corresponds to the foregoing UE-side method embodiment, and each implementation process and implementation of the foregoing method embodiment can be applied to the UE embodiment, with the same technical effect achieved. Specifically, FIG. 7 is a schematic diagram of a hardware structure of UE for implementing an embodiment of this application.

The UE 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the UE 100 may further include a power supply (for example, a battery) supplying power to all components. Optionally, the power supply may be logically connected to the processor 110 through a power management system. In this way, functions such as charge management, discharge management, and power consumption management are implemented by using the power management system. The structure of the UE shown in FIG. 7 does not constitute a limitation on the UE. The UE may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 101 may transmit the downlink data to the processor 110 for processing. In addition, the radio frequency unit 101 may send uplink data to the network-side device. Usually, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may primarily include a first storage area for storing programs or instructions and a second storage area for storing data. The first storage area may store an operating system, an application program or instruction required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 110 may include one or more processing units. Optionally, the processor 110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 110.

The radio frequency unit 101 is configured to receive a measurement reporting configuration sent by a network-side device, where the measurement reporting configuration includes at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, where the first indication information is used to indicate whether the UE triggers measurement reporting based on a prediction result of an AI model. The processor 110 is configured to perform AI model inference on at least one handover candidate cell based on the measurement reporting configuration to obtain an inference result, and perform a cell handover based on the inference result.

According to the UE provided in this embodiment of this application, because the UE can receive the measurement reporting configuration sent by the network-side device, perform AI model inference on at least one neighboring cell based on the AI model input and output information in the network-side device and the AI model inference trigger condition, determine, based on the inference result, whether to trigger measurement reporting, and then report a measurement report when a predicted signal or a real signal meets a condition, the UE can report the measurement report at an appropriate time, thereby shortening a handover delay in the cell handover of the UE and increasing a cell handover success rate.

Optionally, in this embodiment of this application, the processor 110 is specifically configured to: in a case that predicted signal quality of a target handover candidate cell always meets a preset handover event entry condition within the total duration of the AI model prediction output, trigger, by the UE, reporting of a first measurement report; in a case that predicted signal quality of a target handover candidate cell always meets a preset handover event leave condition within the total duration of the AI model prediction output, trigger, by the UE, reporting of a second measurement report; or in a case that real signal quality of a target handover candidate cell meets a preset handover event entry condition within measurement reporting trigger duration configured by the network-side device, trigger, by the UE, reporting of a third measurement report, where the target handover candidate cell is one or more of the at least one handover candidate cell.

Optionally, in this embodiment of this application, after measurement reporting is triggered based on the inference result, the radio frequency unit 101 is further configured to receive a handover command sent by the network-side device, where the handover command is used to instruct to hand over the UE to a target cell that is selected from the at least one handover candidate cell based on the inference result; and the processor 110 is further configured to initiate a random access request to the target cell according to the handover command, where the random access request is used for requesting access to the target cell.

An embodiment of this application further provides a readable storage medium. The readable storage medium stores a program or instruction. When the program or instruction is executed by a processor, each process of the foregoing cell handover method embodiment is implemented, with the same technical effect achieved. To avoid repetition, details are not described herein again.

The processor is a processor in the UE in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instruction to implement each process of the foregoing cell handover method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing cell handover method embodiment, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A cell handover method, comprising:
receiving, by user equipment UE, a measurement reporting configuration sent by a network-side device, wherein the measurement reporting configuration comprises at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, wherein the first indication information is used to indicate whether the UE triggers measurement reporting based on a prediction result of an AI model; and
performing, by the UE, AI model inference on at least one handover candidate cell based on the measurement reporting configuration to obtain an inference result, and performing a cell handover based on the inference result.

2. The method according to claim 1, wherein the AI model input information comprises at least one of the following:
signal quality of a serving cell of the network-side device and/or signal quality of a neighboring cell of the UE at a target time;
a movement parameter of the UE at the target time;
an antenna panel parameter of the UE at the target time, wherein the antenna panel parameter comprises at least one of the following: an antenna panel orientation, an antenna panel rotation direction, and an antenna panel rotation speed;
location information of the UE at the target time;
target location information, wherein the target location information is used to indicate a location of the network-side device and/or a location of a network-side device corresponding to the neighboring cell of the UE;
target direction information, wherein the target direction information is used to indicate an antenna panel orientation of the network-side device;
current frequency information of the UE and/or other frequency information or radio access technology RAT information; and
a beam angle and beam quality of the UE at the target time and/or a historical time, wherein
the target time is a time when execution of AI model inference is triggered or the historical time.

3. The method according to claim 1, wherein the AI model output information comprises at least one of the following:
at least one predicted signal quality;
lowest signal quality in at least one predicted signal quality;
a minimum difference in every two signal quality differences in at least one predicted signal quality;
a handover success rate of the at least one handover candidate cell;
a handover delay of the at least one handover candidate cell;
a probability that an unexpected event occurs in the at least one handover candidate cell; and
at least one beam quality, wherein
the at least one predicted signal quality is signal quality of a serving cell of the network-side device and/or signal quality of a neighboring cell of the UE at at least one first time, the at least one first time is a time within the total duration of the AI model prediction output, and the at least one signal quality is in a one-to-one correspondence with the at least one first time.

4. The method according to claim 3, wherein the unexpected event comprises at least one of the following:
a too late handover event;
a too early handover event; and
a handover to an incorrect cell.

5. The method according to claim 1, wherein the AI model inference trigger condition comprises at least one of the following: a periodic trigger condition, an event trigger condition, and a measurement reporting trigger condition.

6. The method according to claim 5, wherein the event trigger condition comprises at least one of the following:
signal quality of a serving cell of the network-side device is less than or equal to a first preset threshold;
signal quality of a neighboring cell of the UE is greater than or equal to a second preset threshold; and
a difference between the signal quality of the serving cell of the network-side device and the signal quality of the neighboring cell of the UE is less than or equal to a third preset threshold.

7. The method according to claim 1, wherein the reporting content comprises at least one of the following:
signal quality of a serving cell of the network-side device and/or signal quality of a neighboring cell of the UE at a second time, wherein the second time is a time when measurement reporting is triggered, and the signal quality is the signal quality of the serving cell of the network-side device and/or the signal quality of the neighboring cell of the UE, or the signal quality is at least one beam signal quality;
a signal quality prediction result of the serving cell of the network-side device and/or a signal quality prediction result of the neighboring cell of the UE at each time point of the AI model prediction output on the UE;
at least one handover time point and a target signal quality prediction result, wherein the at least one handover time point is an optimal handover time point among time points of the AI model prediction output, and the target signal quality prediction result is a signal quality prediction result of the serving cell of the network-side device and/or a signal quality prediction result of the neighboring cell of the UE at the at least one handover time point;
a handover success rate of handing over the UE to each handover candidate cell at each time point of the AI model prediction output;
a handover delay in handing over the UE to each handover candidate cell at each time point of the AI model prediction output; and
a probability that an unexpected event occurs in handing over the UE to each handover candidate cell at each time point of the AI model prediction output.

8. The method according to claim 7, wherein the reporting content is determined based on the inference result.

9. The method according to claim 1, wherein the inference result comprises at least one of the following: predicted signal quality of the at least one handover candidate cell within the total duration of the AI model prediction output and real signal quality of the at least one handover candidate cell.

10. The method according to claim 1, wherein the process of performing a cell handover based on the inference result comprises: triggering, by the UE, measurement reporting based on the inference result.

11. The method according to claim 10, wherein the triggering measurement reporting based on the inference result comprises:
in a case that predicted signal quality of a target handover candidate cell always meets a preset handover event entry condition within the total duration of the AI model prediction output, triggering, by the UE, reporting of a first measurement report;
in a case that predicted signal quality of a target handover candidate cell always meets a preset handover event leave condition within the total duration of the AI model prediction output, triggering, by the UE, reporting of a second measurement report; or
in a case that real signal quality of a target handover candidate cell meets a preset handover event entry condition within measurement reporting trigger duration configured by the network-side device, triggering, by the UE, reporting of a third measurement report, wherein
the target handover candidate cell is one or more of the at least one handover candidate cell.

12. The method according to claim 11, wherein
the total duration of the AI model prediction output and the measurement reporting trigger duration are duration separately configured by the network-side device; or both the total duration of the AI model prediction output and the measurement reporting trigger duration are duration configured by the network-side device by using the measurement reporting configuration.

13. The method according to claim 1, 10, or 11, wherein the performing a cell handover based on the inference result comprises:
receiving, by the UE, a handover command sent by the network-side device, wherein the handover command is used to instruct to hand over the UE to a target cell that is selected from the at least one handover candidate cell based on the inference result; and
initiating, by the UE, a random access request to the target cell according to the handover command, wherein the random access request is used for requesting access to the target cell.

14. A cell handover apparatus, wherein the cell handover apparatus comprises a receiving module, an execution module, and a trigger module, wherein
the receiving module is configured to receive a measurement reporting configuration sent by a network-side device, wherein the measurement reporting configuration comprises at least one of the following: artificial intelligence AI model related information, AI model input information, AI model output information, an AI model inference trigger condition, a cell handover event related configuration, reporting content expected by the network-side device, total duration of an AI model prediction output, the number or interval of time points of the AI model prediction output, and first indication information, wherein the first indication information is used to indicate whether UE triggers measurement reporting based on a prediction result of an AI model;
the execution module is configured to perform AI model inference on at least one handover candidate cell based on the measurement reporting configuration received by the receiving module, to obtain an inference result; and
the trigger module is configured to perform a cell handover based on the inference result obtained by the execution module.

15. The apparatus according to claim 14, wherein the AI model input information comprises at least one of the following:
signal quality of a serving cell of the network-side device and/or signal quality of a neighboring cell of the UE at a target time;
a movement parameter of the UE at the target time;
an antenna panel parameter of the UE at the target time, wherein the antenna panel parameter comprises at least one of the following: an antenna panel orientation, an antenna panel rotation direction, and an antenna panel rotation speed;
location information of the UE at the target time;
target location information, wherein the target location information is used to indicate a location of the network-side device and/or a location of a network-side device corresponding to the neighboring cell of the UE;
target direction information, wherein the target direction information is used to indicate an antenna panel orientation of the network-side device;
current frequency information of the UE and/or other frequency information or radio access technology RAT information; and
a beam angle and beam quality of the UE at the target time and/or a historical time, wherein
the target time is a time when execution of AI model inference is triggered or the historical time.

16. The apparatus according to claim 14, wherein the AI model output information comprises at least one of the following:
at least one predicted signal quality;
lowest signal quality in at least one predicted signal quality;
a minimum difference in every two signal quality differences in at least one predicted signal quality;
a handover success rate of the at least one handover candidate cell;
a handover delay of the at least one handover candidate cell;
a probability that an unexpected event occurs in the at least one handover candidate cell; and
at least one beam quality, wherein
the at least one predicted signal quality is signal quality of a serving cell of the network-side device and/or signal quality of a neighboring cell of the UE at at least one first time, the at least one first time is a time within the total duration of the AI model prediction output, and the at least one signal quality is in a one-to-one correspondence with the at least one first time.

17. The apparatus according to claim 16, wherein the unexpected event comprises at least one of the following:
a too late handover event;
a too early handover event; and
a handover to an incorrect cell.

18. The apparatus according to claim 14, wherein the AI model inference trigger condition comprises at least one of the following: a periodic trigger condition, an event trigger condition, and a measurement reporting trigger condition.

19. The apparatus according to claim 18, wherein the event trigger condition comprises at least one of the following:
signal quality of a serving cell of the network-side device is less than or equal to a first preset threshold;
signal quality of a neighboring cell of the UE is greater than or equal to a second preset threshold; and
a difference between the signal quality of the serving cell of the network-side device and the signal quality of the neighboring cell of the UE is less than or equal to a third preset threshold.

20. The apparatus according to claim 14, wherein the reporting content comprises at least one of the following:
signal quality of a serving cell of the network-side device and/or signal quality of a neighboring cell of the UE at a second time, wherein the second time is a time when measurement reporting is triggered, and
the signal quality is the signal quality of the serving cell of the network-side device and/or the signal quality of the neighboring cell of the UE, or the signal quality is at least one beam signal quality;
a signal quality prediction result of the serving cell of the network-side device and/or a signal quality prediction result of the neighboring cell of the UE at each time point of the AI model prediction output on the UE;
at least one handover time point and a target signal quality prediction result, wherein the at least one handover time point is an optimal handover time point among time points of the AI model prediction output, and the target signal quality prediction result is a signal quality prediction result of the serving cell of the network-side device and/or a signal quality prediction result of the neighboring cell of the UE at the at least one handover time point;
a handover success rate of handing over the UE to each handover candidate cell at each time point of the AI model prediction output;
a handover delay in handing over the UE to each handover candidate cell at each time point of the AI model prediction output; and
a probability that an unexpected event occurs in handing over the UE to each handover candidate cell at each time point of the AI model prediction output.

21. The apparatus according to claim 20, wherein the reporting content is determined based on the inference result.

22. The apparatus according to claim 14, wherein the inference result comprises at least one of the following: predicted signal quality of the at least one handover candidate cell within the total duration of the AI model prediction output and real signal quality of the at least one handover candidate cell.

23. The apparatus according to claim 14, wherein the process of performing a cell handover based on the inference result comprises: triggering, by the UE, measurement reporting based on the inference result.

24. The apparatus according to claim 23, wherein
the trigger module is specifically configured to: in a case that predicted signal quality of a target handover candidate cell always meets a preset handover event entry condition within the total duration of the AI model prediction output, trigger, by the UE, reporting of a first measurement report; in a case that predicted signal quality of a target handover candidate cell always meets a preset handover event leave condition within the total duration of the AI model prediction output, trigger, by the UE, reporting of a second measurement report; or in a case that real signal quality of a target handover candidate cell meets a preset handover event entry condition within measurement reporting trigger duration configured by the network-side device, trigger, by the UE, reporting of a third measurement report, wherein
the target handover candidate cell is one or more of the at least one handover candidate cell.

25. The apparatus according to claim 24, wherein
the total duration of the AI model prediction output and the measurement reporting trigger duration are duration separately configured by the network-side device; or both the total duration of the AI model prediction output and the measurement reporting trigger duration are duration configured by the network-side device by using the measurement reporting configuration.

26. The apparatus according to claim 14, 23, or 24, wherein the cell handover apparatus further comprises an initiation module, wherein
after the trigger module triggers measurement reporting based on the inference result, the receiving module is further configured to receive a handover command sent by the network-side device, wherein the handover command is used to instruct to hand over the UE to a target cell of the at least one handover candidate cell; and
the initiation module is configured to initiate a random access request to the target cell according to the handover command received by the receiving module, wherein the random access request is used for requesting access to the target cell.

27. User equipment UE, comprising a processor and a memory, wherein the memory stores a program or an instruction capable of running on the processor, and when the program or the instruction is executed by the processor, the steps of the cell handover method according to any one of claims 1 to 13 are implemented.

28. A readable storage medium, wherein the readable storage medium stores a program or an instruction, and when the program or the instruction is executed by a processor, the cell handover method according to any one of claims 1 to 13 is implemented.
